# EUROPÄISCHE PATENTANMELDUNG

(11) **EP 3 425 170 A2**
(43) Veröffentlichungstag der Anmeldung: **09.01.2019**
(21) Anmeldenummer: 18181958.2
(22) Anmeldetag: 05.07.2018
(51) Int. Cl.: F01D 11/00, F01D 11/02

(54) **TURBOMASCHINEN-DICHTUNGSELEMENT**

(30) Priorität: 07.07.2017 DE 102017211643
(71) Anmelder: MTU Aero Engines AG, 80995 München (DE)
(72) Erfinder: Ladewig, Alexander, 83707 Bad Wiessee (DE); Liebl, Christian, 85461 Bockhorn (DE); Schlothauer, Steffen, 85253 Erdweg (DE); Casper, Johannes, 85737 München (DE); Jakimov, Andreas, 85777 Fahrenzhausen (DE); Semmler, Klaus, 85221 Dachau (DE); Scharl, Richard, 85757 Karlsfeld (DE)

(57) **Zusammenfassung**

Die vorliegende Erfindung betrifft eine Dichtungselement (10) zur Dichtung eines Radialspalts zu einem Gegenelement (200, 220) einer Turbomaschine, wobei das Dichtungselement (10) eine Anzahl von in Umfangs- und/oder Axialrichtung benachbarten Zellen (11) aufweist, die durch gemeinsame Wände (12) miteinander verbunden sind, wobei eine Erstreckung in Umfangs- und/oder Axialrichtung von wenigstens einem, insbesondere stirnseitigen, Querschnitt wenigstens einer Zelle (11) in einem ersten Axialabschnitt (A1) des Dichtungselements (11) zur Dichtung gegen einen Radialflansch (210) des Gegenelements (200, 220) kleiner ist als in einem an den ersten Axialabschnitt (A1) angrenzenden stromaufwärtigen zweiten Axialabschnitt (B1) und/oder einem an den ersten Axialabschnitt (A1) angrenzenden stromabwärtigen zweiten Axialabschnitt (B2) des Dichtungselements (11) und/oder wenigstens eine freie Wand wenigstens einer der Zellen und/oder wenigstens eine gemeinsame Wand (12) wenigstens zweier der Zellen (11) auf wenigstens einem radialen Wandabschnitt (W1+W2) in Umfangs- und/oder Axialrichtung geneigt (α) ist und/oder wenigstens eine freie Wand wenigstens einer der Zellen und/oder wenigstens eine gemeinsame Wand (12) wenigstens zweier der Zellen (11) einen ersten radialen Wandabschnitt (W1) und einen angrenzenden zweiten, spaltnäheren radialen Wandabschnitt (W2), dessen maximale Wandstärke (t2) kleiner ist als eine maximale Wandstärke (t1) des ersten Wandabschnitts (W1), und/oder eine spaltzugewandte Stirnseite (13) aufweist, deren Fläche kleiner ist als eine Fläche wenigstens eines hierzu parallelen Querschnitts eines spaltferneren radialen Wandabschnitts (W1).

## Beschreibung

Die vorliegende Erfindung betrifft ein Dichtungselement zur Dichtung eines Radialspalts zu einem Gegenelement einer Turbomaschine, eine Anordnung für eine Turbomaschine und eine Turbomaschine mit dem Dichtungselement sowie ein Verfahren zum Herstellen des Dichtungselements.

Aus der US 2009/0041610 A1 ist eine durch MIM ("Metal(urigcal) Injection Molding") hergestellte (Honig)Wabendichtung bekannt, deren Zellen in Axialrichtung unterschiedliche geometrische Formen aufweisen.

Aus der DE 10 2014 208 801 A1 ist ein Dichtungssegment zur Abdichtung eines Radialspalts zwischen einem Rotor und einem Stator einer Strömungsmaschine bekannt, das schichtweise durch ein freiformendes Verfahren hergestellt ist und eine Randzone aufweist, in der eine Vielzahl von vordefinierten Schwächungsbereichen ausgebildet ist.

Eine Aufgabe einer Ausführung der vorliegenden Erfindung ist es, ein Dichtungselement zur Dichtung eines Radialspalts zu einem Gegenelement einer Turbomaschine und/oder dessen Herstellung zu verbessern.

Diese Aufgabe wird durch ein Dichtungselement mit den Merkmalen des Anspruchs 1,5 und/oder 9 bzw. ein Verfahren mit den Merkmalen des Anspruchs 18 gelöst. Ansprüche 16, 17 stellen eine Anordnung bzw. Turbomaschine mit (wenigstens) einem hier beschriebenen Dichtungselement unter Schutz. Vorteilhafte Ausführungsformen der Erfindung sind Gegenstand der Unteransprüche.

Nach einer Ausführung der vorliegenden Erfindung weist ein Dichtungselement, das zur Dichtung, insbesondere Labyrinthdichtung, eines Radialspalts zu einem (relativ zu dem Dichtungselement beweglichen) Gegenelement einer Turbomaschine, vorgesehen bzw. eingerichtet ist bzw. verwendet wird, eine Anzahl von in Umfangs- und/oder Axialrichtung benachbarten Zellen auf, die, insbesondere paarweise, durch gemeinsame Wände miteinander verbunden sind.

In einer Ausführung weisen eine oder mehrere, insbesondere wenigstens die Mehrzahl, der Zellen (jeweils) eine spaltzugewandte offene Stirnseite und/oder einen spaltabgewandten geschlossenen Zellenboden und/oder wenigstens teilweise, insbesondere wenigstens im Wesentlichen über ihre gesamte radiale Höhe, polygonale, insbesondere hexagonale, insbesondere (honig)wabenförmige, Querschnitte auf. Zusätzlich oder alternativ sind in einer Ausführung eine oder mehrere, insbesondere wenigstens die Mehrzahl, der Zellen bzw. Waben (jeweils) durch ihre sechs Wände mit sechs benachbarten Zellen verbunden, mit denen sie jeweils eine dieser Wände gemeinsam haben. In einer Ausführung ist das Dichtungselement somit insbesondere eine (Honig)Wabendichtung, die zur Dichtung von Radialspalten bei Turbomaschinen besonders vorteilhaft ist.

In einer Ausführung ist das Dichtungselement ein in Umfangsrichtung in zwei oder mehr Segmente segmentierter Dichtungsring oder ein Segment eines solchen Ringes. Hierdurch kann in einer Ausführung die Herstellung und/oder Montage verbessert werden.

Die Richtungsangabe "axial" bzw. "Axialrichtung" bezieht sich vorliegend insbesondere in fachüblicher Weise auf eine Richtung parallel zu einer Rotations- bzw. (Haupt)Maschinenachse der Turbomaschine, die Richtungsangabe "Umfangsrichtung" entsprechend auf eine Rotationsrichtung der Turbomaschine, die Richtungsangabe "radial" bzw. "Radialrichtung" entsprechend auf eine auf der Axial- und Umfangsrichtung senkrechte Richtung.

In einer Ausführung wird/werden bzw. ist/sind eine oder mehrere, insbesondere wenigstens die Mehrzahl, der Zellen (jeweils) mit einem Gehäuse- oder Rotorelement, insbesondere einer Schaufelplattform oder einem Dichtungsträger, der Turbomaschine integral ausgebildet bzw. hergestellt oder zerstörungsfrei lösbar oder nicht zerstörungsfrei lösbar, insbesondere stoff-, reib- und/oder formschlüssig, verbunden. Durch eine integrale Herstellung kann in einer Ausführung insbesondere Festigkeit und/oder Gewicht verbessert werden, durch eine separate Herstellung und anschließende Verbindung mit dem Gehäuse- bzw. Rotorelement insbesondere die Herstellung und/oder Montage verbessert werden. Bevorzugt ist das Dichtungselement gehäuseseitig bzw. -fest, das Gegenelement entsprechend rotorseitig bzw. -fest.

In einer Ausführung sind bzw. werden die Zellen wenigstens teilweise durch ein freiformendes, insbesondere generatives, Verfahren und/oder wenigstens teilweise aus Metall, insbesondere einer Nickel- und/oder Kobalt-Basis-Legierung, hergestellt.

Metall, insbesondere eine Nickel- und/oder Kobalt-Basis-Legierung, sind insbesondere für den Einsatz in Gasturbinen besonders geeignet. Durch ein freiformendes, insbesondere generatives, Verfahren können die nachfolgend erläuterten Formen und/oder Variationen der Zellen, insbesondere Waben, besonders vorteilhaft hergestellt werden. In einer Ausführung umfasst das freiformende bzw. generative Verfahren das schichtweise lokale bzw. selektive, insbesondere optische, thermische und/oder chemische, Verfestigen und/oder Verbinden von, insbesondere losem, insbesondere pastösem, flüssigem und/oder schüttfähigem, insbesondere körnigem oder pulverförmigen, Ausgangsmaterial, insbesondere schichtweises lokales bzw. selektives Verlöten, Sintern, Schmelzen oder dergleichen. Diesbezüglich wird ergänzend auf die eingangs genannte DE 10 2014 208 801 A1 Bezug genommen und deren Inhalt in die vorliegende Offenbarung einbezogen.

Nach einer Ausführung der vorliegenden Erfindung weist eine Anordnung für eine Turbomaschine, insbesondere eine Verdichter- oder Turbinenstufe für eine Gasturbine, insbesondere ein(es) Flugtriebwerk(s), insbesondere wenigstens eine Anordnung einer Turbomaschine, insbesondere wenigstens eine Verdichter- oder Turbinenstufe einer Gasturbine, insbesondere ein(es) Flugtriebwerk(s) (jeweils) ein Gegenelement und ein hier beschriebenes gehäuse- oder rotorfestes Dichtungselement zur Dichtung eines Radialspalts zu dem rotor- bzw. gehäusefesten und entsprechend relativ zu dem Dichtungselement beweglichen Gegenelement auf. Dies stellt eine besonders vorteilhafte Anwendung der vorliegenden Erfindung dar.

Nach einem Aspekt der vorliegenden Erfindung ist eine, insbesondere maximale, mittlere und/oder minimale, Erstreckung in Umfangs- und/oder Axialrichtung, insbesondere eine Größe, von einem oder mehreren Querschnitten, insbesondere (wenigstens) einem stirnseitigen, Querschnitt, einer oder mehrerer, insbesondere wenigstens der Mehrzahl, der Zellen in einem ersten Axialabschnitt des Dichtungselements, der zur Dichtung gegen einen Radialflansch, insbesondere eine Spitze bzw. Stirnfläche eines sogenannten Dichtungsfins, des Gegenelements vorgesehen bzw. eingerichtet ist bzw. verwendet wird, insbesondere bei stillstehendem Rotor und/oder in einem Auslegungsbetriebszustand der Turbomaschine einem Radialflansch, insbesondere einer Spitze bzw. Stirnfläche eines Dichtungsfins, des Gegenelements radial gegenüber bzw. am nächsten liegt bzw. benachbart ist, kleiner als (eine, insbesondere die gleiche bzw. entsprechende und/oder maximale, mittlere und/oder minimale, Erstreckung in Umfangs- und/oder Axialrichtung, insbesondere Größe, von einem oder mehreren, insbesondere entsprechenden Querschnitt(en), insbesondere (wenigstens) einem stirnseitigen Querschnitt, einer oder mehrerer, insbesondere wenigstens der Mehrzahl, der Zellen) in einem an diesen ersten Axialabschnitt axial angrenzenden stromaufwärtigen zweiten Axialabschnitt und/oder einem an den ersten Axialabschnitt axial angrenzenden stromabwärtigen zweiten Axialabschnitt des Dichtungselements.

Hierdurch kann in Ausführung durch die feinmaschigere Zellenanordnung eine Dichtung gegen den Radialflansch bzw. Dichtungsfin verbessert und zugleich in wenigstens einem axial benachbarten Bereich bei geringerem Gewicht eine Notlaufdichtung bei übermäßiger Axialverlagerung des Gegenelements zur Verfügung gestellt und/oder eine Kavität teilweise gefüllt und so insbesondere ein Pumpen eines Verdichters reduziert bzw. verbessert werden.

In einer Ausführung ist eine, insbesondere maximale, mittlere und/oder minimale, Erstreckung in Umfangs- und/oder Axialrichtung, insbesondere eine Größe, von einem oder mehreren Querschnitt(en), insbesondere (wenigstens) einem stirnseitigen Querschnitt, einer oder mehrerer, insbesondere wenigstens der Mehrzahl, der Zellen in einem weiteren ersten Axialabschnitt des Dichtungselements, der zur Dichtung gegen einen weiteren Radialflansch, insbesondere eine Spitze bzw. Stirnfläche eines weiteren Dichtungsfins, des Gegenelements vorgesehen bzw. eingerichtet ist bzw. verwendet wird, insbesondere bei stillstehendem Rotor und/oder in einem Auslegungsbetriebszustand der Turbomaschine einem weiteren Radialflansch, insbesondere einer Spitze bzw. Stirnfläche eines weiteren Dichtungsfins, des Gegenelements radial gegenüber bzw. am nächsten liegt bzw. benachbart ist, kleiner als (eine, insbesondere die gleiche bzw. entsprechende und/oder maximale, mittlere und/oder minimale, Erstreckung in Umfangs- und/oder Axialrichtung, insbesondere Größe, von einem oder mehreren, insbesondere entsprechenden, Querschnitten, insbesondere (wenigstens) einem stirnseitigen Querschnitt, einer oder mehrerer, insbesondere wenigstens der Mehrzahl, der Zellen) in einem an diesen weiteren ersten Axialabschnitt angrenzenden stromaufwärtigen zweiten Axialabschnitt und/oder einem an diesen weiteren ersten Axialabschnitt angrenzenden stromabwärtigen zweiten Axialabschnitt des Dichtungselements.

Hierdurch können in einer Ausführung die vorgenannten Vorteile auch bei Gegenelementen mit zwei oder mehr Radialflanschen bzw. Dichtungsfins erzielt und somit die Dichtwirkung verbessert werden.

In einer Ausführung beträgt eine, insbesondere maximale, mittlere und/oder minimale, axiale Länge des ersten und/oder des weiteren ersten Axialabschnitts wenigstens 110% und/oder höchstens 300% einer axiale Länge einer Stirnseite des diesem gegenüberliegenden Radialflanschs des Gegenelements und/oder wenigstens 50% und/oder höchstens 300% des angrenzenden stromaufwärtigen und/oder stromabwärtigen zweiten Axialabschnitts.

Hierdurch können in einer Ausführung reguläre axiale Verlagerungen des Gegenelements im (normalen) Betrieb vorteilhaft kompensiert und zugleich bei geringerem Gewicht eine Notlaufdichtung bei übermäßiger Axialverlagerung des Gegenelements zur Verfügung gestellt und/oder eine Kavität teilweise gefüllt und so insbesondere ein Pumpen eines Verdichters reduziert bzw. verbessert werden.

In einer Ausführung beträgt die, insbesondere maximale, mittlere und/oder minimale, Erstreckung, insbesondere Größe, von einem oder mehreren Querschnitten, insbesondere (wenigstens) einem stirnseitigen, Querschnitt, einer oder mehrerer, insbesondere wenigstens der Mehrzahl, der Zellen in dem ersten und/oder in dem weiteren ersten Axialabschnitt in Umfangs- und/oder Axialrichtung höchstens 95%, insbesondere höchstens 80%, und/oder wenigstens 25%, insbesondere wenigstens 50%, einer, insbesondere der gleichen bzw. entsprechenden und/oder maximalen, mittleren und/oder minimalen, Erstreckung in Umfangs- und/oder Axialrichtung, insbesondere Größe, von einem oder mehreren, insbesondere entsprechenden, Querschnitten, insbesondere (wenigstens) einem stirnseitigen Querschnitt, einer oder mehrerer, insbesondere wenigstens der Mehrzahl, der Zellen in dem angrenzenden stromaufwärtigen und/oder stromabwärtigen zweiten Axialabschnitts.

Hierdurch kann in Ausführung eine Dichtung gegen den Radialflansch bzw. Dichtungsfin verbessert und zugleich in wenigstens einem axial benachbarten Bereich bei geringerem Gewicht eine Notlaufdichtung bei übermäßiger Axialverlagerung des Gegenelements zur Verfügung gestellt und/oder eine Kavität teilweise gefüllt und so insbesondere ein Pumpen eines Verdichters reduziert bzw. verbessert werden.

Nach einem weiteren Aspekt der vorliegenden Erfindung, der in einer Ausführung mit dem vorstehend erläuterten Aspekt der unterschiedlichen Erstreckungen kombiniert oder auch eigenständig bzw. ohne diesen realisiert sein kann, ist bzw. sind eine oder mehrere freie Wände einer oder mehrerer, insbesondere wenigstens der Mehrzahl, der Zellen und/oder eine oder mehrere gemeinsame Wände von zwei oder mehr der Zellen, insbesondere wenigstens die Mehrzahl (paarweise) gemeinsamer Wände der Zellen, (jeweils) auf wenigstens einem radialen Wandabschnitt in Umfangs- und/oder Axialrichtung geneigt.

Hierdurch kann in einer Ausführung eine Dichtwirkung und/oder ein Einreiben des Gegenelements verbessert werden.

In einer Ausführung ist die Wand bzw. sind die oder einige der Wände auf dem Wandabschnitt (jeweils) in eine Bewegungsrichtung des Gegenelements relativ zu dem Dichtungselement (Relativbewegungsrichtung), insbesondere also in Rotationsrichtung der Turbomaschine bzw. Umlaufrichtung ihres Rotors geneigt. Hierdurch kann in einer Ausführung insbesondere ein Einreiben des Gegenelements verbessert werden.

In einer Ausführung ist die Wand bzw. sind die oder einige der Wände auf dem Wandabschnitt (jeweils) (ent)gegen eine(r) Bewegungsrichtung des Gegenelements relativ zu dem Dichtungselement (Relativbewegungsrichtung), insbesondere also (ent)gegen eine(r) Rotationsrichtung der Turbomaschine bzw. Umlaufrichtung ihres Rotors geneigt. Hierdurch kann in einer Ausführung insbesondere eine Dichtwirkung verbessert werden.

In einer Ausführung ist die Wand bzw. sind die oder einige der Wände auf dem Wandabschnitt (jeweils) in eine Durchströmungsrichtung der Turbomaschine geneigt. Hierdurch kann in einer Ausführung insbesondere ein Einreiben des Gegenelements verbessert werden.

In einer Ausführung ist die Wand bzw. sind die oder einige der Wände auf dem Wandabschnitt (jeweils) (ent)gegen eine(r) Durchströmungsrichtung der Turbomaschine geneigt. Hierdurch kann in einer Ausführung insbesondere eine Dichtwirkung verbessert werden.

In einer Ausführung erstreckt sich der radiale Wandabschnitt, auf dem die Wand bzw. die oder einige der Wände geneigt ist/sind, (jeweils) von einer spaltzugewandten Stirnseite der Wand und/oder von einem spaltabgewandten Boden der Zelle aus und/oder über wenigstens 5%, insbesondere wenigstens 25%, insbesondere wenigstens 60%, einer radialen Wandhöhe der Wand, insbesondere über, wenigstens im Wesentlichen, die gesamte radiale Wandhöhe bzw. von einem spaltabgewandten Boden bis zu einer spaltzugewandten Stirnseite der Wand.

Hierdurch kann in einer Ausführung eine Dichtwirkung und/oder ein Einreiben des Gegenelements verbessert werden.

In einer Ausführung ist eine spaltzugewandte Stirnseite der Wand bzw. der oder einiger der Wände (jeweils) in Umfangs- und/oder Axialrichtung um wenigstens 1%, insbesondere wenigstens 2%, insbesondere wenigstens 10%, und/oder höchstens 100%, insbesondere höchstens 50%, insbesondere höchstens 25%, einer radialen Wandhöhe gegen einen Verbindungsquerschnitt der Wand mit einem bzw. dem Bodens der Zelle versetzt.

Hierdurch kann in einer Ausführung eine Dichtwirkung und/oder ein Einreiben des Gegenelements verbessert werden.

Nach einem weiteren Aspekt der vorliegenden Erfindung, der in einer Ausführung mit einem oder beiden der vorstehend erläuterten Aspekte der unterschiedlichen Erstreckungen bzw. geneigten Wände kombiniert oder auch eigenständig bzw. ohne diese realisiert sein kann, weist bzw. weisen eine oder mehrere freie Wände einer oder mehrerer, insbesondere wenigstens der Mehrzahl, der Zellen und/oder eine oder mehrere gemeinsame Wände von zwei oder mehr der Zellen, insbesondere wenigstens die Mehrzahl (paarweise) gemeinsamer Wände der Zellen, (jeweils) einen, insbesondere zusammenhängenden, ersten radialen Wandabschnitt und einen angrenzenden, insbesondere zusammenhängenden, zweiten, spaltnäheren radialen Wandabschnitt, dessen maximale Wandstärke kleiner ist als eine maximale Wandstärke dieses ersten Wandabschnitts, und/oder eine spaltzugewandte Stirnseite auf, deren (Stirn)Fläche kleiner ist als eine (Querschnitts)Fläche wenigstens eines zu dieser Stirnseite bzw. -fläche parallelen Querschnitts eines spaltferneren radialen Wandabschnitts.

Durch eine Reduzierung einer maximalen Wandstärke eines spaltnäheren Wandabschnitts und/oder einer Stirnfläche gegenüber einem spaltferneren Querschnitt kann in einer Ausführung ein Einreiben des Gegenelements und/oder eine Stabilität der Zelle(n), insbesondere des spaltferneren Bereichs, verbessert, in einer Ausführung vorteilhaft ein Ausbrechen von bzw. Zerlegen in Bruchstücke(n) vermieden oder dessen Wahrscheinlichkeit reduziert werden, insbesondere, da für das Einreiben einerseits die maximale Wandstärke eines spaltnäheren Wandabschnitts und andererseits eine Stirnfläche besonders relevant sind.

In einer Ausführung nimmt die Querschnittsfläche und/oder maximale Wandstärke der Wand bzw. der oder einiger der Wände in wenigstens einem verjüngten, insbesondere dem zweiten, Wandabschnitt zu einer spaltzugewandten Stirnseite der Wand hin, insbesondere bis zu der Stirnseite und/oder monoton, insbesondere streng monoton, ab.

Hierdurch kann in einer Ausführung eine Herstellung und/oder Stabilität des Dichtungselements und/oder ein Einreiben des Gegenelements verbessert werden.

In einer Ausführung erstreckt sich der verjüngte bzw. zweite Wandabschnitt der Wand bzw. der oder einiger der Wände (jeweils) von einer spaltzugewandten Stirnseite der Wand aus und/oder über wenigstens 1%, insbesondere wenigstens 2%, insbesondere wenigstens 5%, und/oder höchstens 50%, insbesondere höchstens 25%, insbesondere höchstens 10%, einer radialen Höhe der Wand und/oder der erste bzw. spaltfernere Wandabschnitt der (jeweiligen) Wand von einer spaltabgewandten Boden der Zelle aus und/oder über wenigstens 50%, insbesondere wenigstens 75%, insbesondere wenigstens 90%, und/oder höchstens 99%, insbesondere höchstens 98%, insbesondere höchstens 95%, einer radialen Höhe der Wand.

Hierdurch kann in einer Ausführung eine Stabilität des Dichtungselements und/oder ein Einreiben des Gegenelements verbessert werden.

In einer Ausführung beträgt die maximale Wandstärke der Wand bzw. der oder einiger der Wände (jeweils) in dem verjüngten und/oder zweiten Wandabschnitt höchstens 90%, insbesondere höchstens 75%, insbesondere höchstens 60%, und/oder wenigstens 10%, insbesondere wenigstens 25%, insbesondere wenigstens 40%, der maximalen Wandstärke der Wand in dem ersten Wandabschnitt. Zusätzlich oder alternativ beträgt in einer Ausführung die (Stirn)Fläche der Stirnseite der Wand bzw. der oder einiger der Wände (jeweils) höchstens 90%, insbesondere höchstens 75%, insbesondere höchstens 60%, und/oder wenigstens 10%, insbesondere wenigstens 25%, insbesondere wenigstens 40%, der (Querschnitts)Fläche wenigstens eines hierzu parallelen Querschnitts in dem spaltferneren Wandabschnitt, insbesondere der maximalen, minimalen und/oder mittleren (Querschnitts)Fläche in dem spaltferneren Wandabschnitt.

Hierdurch kann in einer Ausführung eine Stabilität des Dichtungselements und/oder ein Einreiben des Gegenelements verbessert werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Meridianschnitt einer Turbomaschine mit Dichtungselementen nach Ausführungen der vorliegenden Erfindung;
- Fig. 2, 3: einen Schnitt längs der Linie A-A und/oder B-B in Fig. 1; und
- Fig. 4, 5: vergrößerte Teilschnitte längs der Linie C-C, D-D und/oder E-E in Fig. 2 oder Fig. 3.

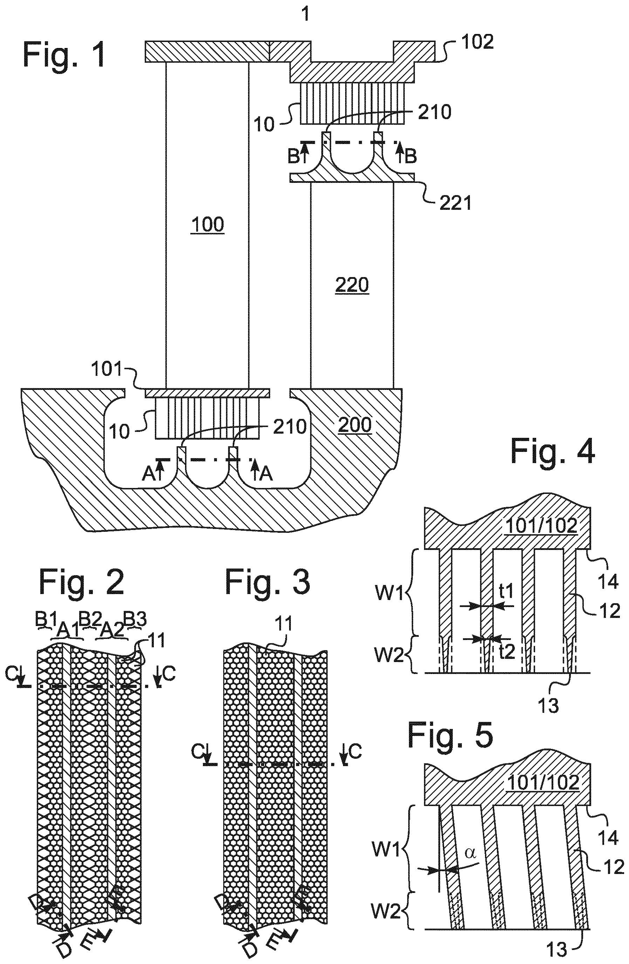

Fig. 1 zeigt einen Meridianschnitt eines Leitgitters und eines Laufgitters einer Verdichter- oder Turbinenstufe einer erfindungsgemäßen Gasturbine, in dem eine Rotations- bzw. Hauptmaschinenachse der Gasturbine (horizontal in Fig. 1) liegt.

Das Leitgitter weist Leitschaufeln 100 mit radial inneren Plattformen 101 auf, die integral mit einem erfindungsgemäßen Dichtungselement in Form einer (Honig)Wabendichtung 10 ausgebildet oder stoff-, reib- und/oder formschlüssig damit verbunden sind. Die Wabendichtung 10 dichtet einen Radialspalt zu einem Rotor 200 mit zwei axial beabstandeten Dichtfins 210.

Das rotorfeste Laufgitter weist Laufschaufeln 220 mit radial äußeren Plattformen 221 mit zwei axial beabstandeten Dichtfins 210 auf. Ein gehäusefester Dichtungsträger 102 ist integral mit einem erfindungsgemäßen Dichtungselement in Form einer (Honig)Wabendichtung 10 ausgebildet oder stoff-, reib- und/oder formschlüssig damit verbunden, die einen Radialspalt zu dem rotorfesten Gegenelement 200 bzw. 220 dichtet.

Diese kompakte und teilweise schematisierte Darstellung deutet bevorzugte Anwendungsmöglichkeiten der vorliegenden Erfindung an, ohne dass diese hierauf beschränkt wäre.

Wie insbesondere in den Schnitten der Fig. 2, 3 erkennbar, weist das Dichtungselement 10, das in Umfangsrichtung segmentiert ist, aber sich auch integral über 360° erstrecken kann, eine Anzahl von in Umfangsrichtung (vertikal in Fig. 2, 3) und Axialrichtung (horizontal in Fig. 1-3) benachbarten (Honig)Waben 11 auf, die durch ein freiformendes, insbesondere generatives, Verfahren und/oder aus Metall, insbesondere einer Nickel- und/oder Kobalt-Basis-Legierung, hergestellt sind bzw. werden und jeweils sechs Wände 12, eine spaltzugewandte offene Stirnseite 13 und einen spaltabgewandten geschlossen Boden 14 (vgl. 4, 5) aufweisen und mit den Leitschaufelplattformen 101 bzw. dem Dichtungsträger 102 integral ausgebildet bzw. verbunden sind. In Umfangs- und Axialrichtung benachbarte Waben 11 sind jeweils paarweise durch gemeinsame Wände 12 miteinander verbunden.

Ein erster Aspekt der vorliegenden Erfindung wird nachfolgend mit Bezug auf den Schnitt der Fig. 2 erläutert, die gleichermaßen einen Schnitt längs der Linie A-A und/oder B-B in Fig. 1 darstellen kann. Mit anderen Worten stellt in einer Ausführung Fig. 2 einen Schnitt nur längs der Linie A-A in Fig. 1 dar, in einer anderen Ausführung einen Schnitt nur längs der Linie B-B in Fig. 1 und in einer weiteren Ausführung einen Schnitt sowohl längs der Linie A-A- als auch einen, gegebenenfalls skalierten, Schnitt längs der Linie B-B.

Wie im Schnitt der Fig. 2 erkennbar, ist eine Erstreckung bzw. Größe in Umfangs- und Axialrichtung von stirnseitigen Querschnitten von Waben 11 in einem ersten Axialabschnitt A1 des Dichtungselements 10 zur Dichtung gegen einen der Radialflansche 210 des Gegenelements 200 bzw. 220 kleiner als in einem an diesen ersten Axialabschnitt A1 angrenzenden stromaufwärtigen zweiten Axialabschnitt B1 und einem an den ersten Axialabschnitt A1 angrenzenden stromabwärtigen zweiten Axialabschnitt B2 des Dichtungselements 10. Zusätzlich ist auch eine Erstreckung bzw. Größe in Umfangs- und Axialrichtung von stirnseitigen Querschnitten von Waben 11 in einem weiteren ersten Axialabschnitt A2 des Dichtungselements zur Dichtung gegen den anderen bzw. weiteren Radialflansch 210 des Gegenelements 200 bzw. 220 kleiner als in dem an diesen weiteren ersten Axialabschnitt A2 angrenzenden stromaufwärtigen zweiten Axialabschnitt B2 und einem an diesen weiteren ersten Axialabschnitt A2 angrenzenden stromabwärtigen zweiten Axialabschnitt B3 des Dichtungselements 10.

Ein zweiter Aspekt der vorliegenden Erfindung wird nachfolgend mit Bezug auf den Schnitt der Fig. 5 erläutert, die gleichermaßen einen Schnitt längs der Linie C-C, D-D und/oder E-E in Fig. 2 oder 3 darstellen kann.

Mit anderen Worten stellt in einer Ausführung Fig. 5 einen Schnitt längs der Linie C-C in Fig. 2 dar, in einer Ausführung zusätzlich oder alternativ einen, gegebenenfalls skalierten, Schnitt längs der Linie D-D und/oder einen, gegebenenfalls skalierten, Schnitt längs der Linie E-E in Fig. 2. In einer anderen Ausführung stellt Fig. 5 einen Schnitt längs der Linie C-C in Fig. 3 dar, in einer Ausführung zusätzlich oder alternativ einen, gegebenenfalls skalierten, Schnitt längs der Linie D-D und/oder einen, gegebenenfalls skalierten, Schnitt längs der Linie E-E in Fig. 3.

Entsprechend ist in einer Ausführung, in der Fig. 5 einen Schnitt längs der Linie C-C, D-D und/oder E-E in Fig. 2 darstellt, der nachfolgend erläuterte zweite Aspekt mit dem vorstehend erläuterten ersten Aspekt der in Axialrichtung variierenden Wabengrößen kombiniert.

In einer anderen Ausführung, in der Fig. 5 einen Schnitt längs der Linie C-C, D-D und/oder E-E in Fig. 3 darstellt, ist der nachfolgend erläuterte zweiter Aspekt mit homogenen bzw. (auch) in Axialrichtung gleich großen Waben bzw. ohne den vorstehend erläuterten ersten Aspekt realisiert.

Wie im Schnitt der Fig. 5 erkennbar, sind gemeinsame Wände 12 der Waben 11 in Umfangsrichtung (vgl. Fig. 5 als Schnitt längs der Linie D-D und/oder E-E in Fig. 2 oder 3) in oder gegen eine Bewegungsrichtung des Gegenelements 200 bzw. 220 relativ zu dem Dichtungselement 10 und/oder in Axialrichtung (vgl. Fig. 5 als Schnitt längs der Linie C-C in Fig. 2 oder 3) in oder gegen eine Durchströmungsrichtung des Leit- und Laufgitters über ihre gesamte Wandhöhe W1+W2 um einen Winkel α geneigt, so dass die spaltzugewandten Stirnseiten13 der Wände in Umfangs- bzw. Axialrichtung gegen einen Verbindungsquerschnitt der Wand 12 mit dem Boden 14 der Wabe 11 versetzt sind.

Dabei sind im Ausführungsbeispiel die Wände 12, die sich rein in Umfangsrichtung erstrecken, nur in Axialrichtung geneigt (vgl. Schnitt längs der Linie C-C in Fig. 2 bzw. 3), während die hierzu abgewinkelten anderen Wände 12 der Waben 11 (vgl. Schnitt längs der Linie D-D bzw. E-E in Fig. 2 bzw. 3) sowohl in Umfangs- als auch in Axialrichtung geneigt bzw. ihre Stirnseiten 13 in Umfangs- und Axialrichtung versetzt sind.

Wenn in einer nicht dargestellten Abwandlung Wände 12 von Waben 11 sich rein in Axialrichtung erstrecken, so sind diese in einer Ausführung nur in Umfangsrichtung in oder gegen eine Relativbewegungsrichtung des Gegenelements 200 bzw. 220 geneigt. Hierzu sind beispielsweise die Waben und Schnittlinien der Fig. 3 um 90° zu drehen.

Ein dritter Aspekt der vorliegenden Erfindung wird nachfolgend insbesondere mit Bezug auf den aus- bzw. durchgezogen dargestellten Schnitt der Fig. 4 erläutert, die gleichermaßen einen Schnitt längs der Linie C-C, D-D und/oder E-E in Fig. 2 oder 3 darstellen kann.

Mit anderen Worten stellt in einer Ausführung Fig. 4 einen Schnitt längs der Linie C-C in Fig. 2 dar, in einer Ausführung zusätzlich oder alternativ einen, gegebenenfalls skalierten, Schnitt längs der Linie D-D und/oder einen, gegebenenfalls skalierten, Schnitt längs der Linie E-E in Fig. 2. In einer anderen Ausführung stellt Fig. 4 einen Schnitt längs der Linie C-C in Fig. 3 dar, in einer Ausführung zusätzlich oder alternativ einen, gegebenenfalls skalierten, Schnitt längs der Linie D-D und/oder einen, gegebenenfalls skalierten, Schnitt längs der Linie E-E in Fig. 3. Entsprechend ist in einer Ausführung, in der Fig. 4 einen Schnitt längs der Linie C-C, D-D und/oder E-E in Fig. 2 darstellt, der nachfolgend erläuterte dritte Aspekt mit dem vorstehend erläuterten ersten Aspekt der in Axialrichtung variierenden Wabengrößen kombiniert. In einer anderen Ausführung, in der Fig. 4 einen Schnitt längs der Linie C-C, D-D und/oder E-E in Fig. 3 darstellt, ist der nachfolgend erläuterte dritte Aspekt mit homogenen bzw. (auch) in Axialrichtung gleich großen Waben bzw. ohne den vorstehend erläuterten ersten Aspekt realisiert. In einer in Fig. 5 gestrichelt angedeuteten Ausführung können der zweite und dritte Aspekt miteinander kombiniert sein, insbesondere auch mit dem ersten Aspekt (vgl. gestrichelte Kontur in Fig. 5 als Schnitt längs der Linie C-C, D-D und/oder E-E in Fig. 2) oder ohne diesen (vgl. gestrichelte Kontur in Fig. 5 als Schnitt längs der Linie C-C, D-D und/oder E-E in Fig. 3).

Wie im aus- bzw. durchgezogenen Schnitt der Fig. 4 bzw. dem gestrichelten Schnitt der Fig. 5 erkennbar, weisen die gemeinsamen Wände 12 der Waben 11 jeweils einen ersten radialen Wandabschnitt W1 und einen angrenzenden zweiten, spaltnäheren radialen Wandabschnitt W2 auf, dessen maximale Wandstärke t2 kleiner ist als eine maximale Wandstärke t1 des ersten Wandabschnitts W1. Zusätzlich ist die Fläche einer spaltzugewandten Stirnseite 13 dieser Wände 12 jeweils kleiner als hierzu parallele Querschnittsflächen des spaltferneren radialen Wandabschnitts W1.

Die Querschnittsfläche und maximale Wandstärke t2 der Wände 12 in dem zweiten Wandabschnitt W2 nimmt jeweils bis zu der spaltzugewandten Stirnseite 12 monoton ab.

Der zweite Wandabschnitt W2 erstreckt sich jeweils von der spaltzugewandten Stirnseite 12 der Wand aus, der erste, spaltfernere Wandabschnitt von dem spaltabgewandten Boden 14 aus.

Obwohl in der vorhergehenden Beschreibung exemplarische Ausführungen erläutert wurden, sei daraufhingewiesen, dass eine Vielzahl von Abwandlungen möglich ist.

So wurde vorstehend der erste Aspekt der in Axialrichtung variierenden Wabengröße in Verbindung mit dem zweiten Aspekt der geneigten Wände (vgl. Fig. 5) und/oder dem dritten Aspekt der radial zu den Stirnseiten 13 hin verjüngten Wandstärken (vgl. ausgezogene Kontur in Fig. 4 bzw. gestrichelte Kontur in Fig. 5) erläutert. In einer Ausführung kann der erste Aspekt auch ohne den zweiten und dritten Aspekt realisiert sein. Dies ist gestrichelt in Fig. 4 angedeutet.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Wabendichtung (Dichtungselement)
- 11: Wabe
- 12: Wand
- 13: (Waben-/Wand-)Stirnseite
- 14: Boden
- 100: Leitschaufel
- 101: Plattform
- 102: Dichtungsträger
- 200: Rotor (Gegenelement)
- 210: Dichtfin
- 220: Laufschaufel (Gegenelement)
- 221: Plattform

- A1: erster Axialabschnitt
- A2: weiterer erster Axialabschnitt
- B1-B3: zweiter Axialabschnitt
- t1, t2: maximale Wandstärke
- W1: erster/spaltfernerer radialer Wandabschnitt
- W2: zweiter/verjüngter radialer Wandabschnitt
- α: Neigung(swinkel)

## Patentansprüche

1. Dichtungselement (10) zur Dichtung eines Radialspalts zu einem Gegenelement (200, 220) einer Turbomaschine, wobei das Dichtungselement (10) eine Anzahl von in Umfangs- und/oder Axialrichtung benachbarten Zellen (11) aufweist, die durch gemeinsame Wände (12) miteinander verbunden sind, wobei eine Erstreckung in Umfangs- und/oder Axialrichtung von wenigstens einem, insbesondere stirnseitigen, Querschnitt wenigstens einer Zelle (11) in einem ersten Axialabschnitt (A1) des Dichtungselements (11) zur Dichtung gegen einen Radialflansch (210) des Gegenelements (200, 220) kleiner ist als in einem an den ersten Axialabschnitt (A1) angrenzenden stromaufwärtigen zweiten Axialabschnitt (B1) und/oder einem an den ersten Axialabschnitt (A1) angrenzenden stromabwärtigen zweiten Axialabschnitt (B2) des Dichtungselements (11).

2. Dichtungselement (10) nach dem vorhergehenden Anspruch, **dadurch gekennzeichnet, dass** eine Erstreckung in Umfangs- und/oder Axialrichtung von wenigstens einem, insbesondere stirnseitigen, Querschnitt wenigstens einer Zelle (11) in einem weiteren ersten Axialabschnitt (A2) des Dichtungselements (11) zur Dichtung gegen einen weiteren Radialflansch (210) des Gegenelements (200, 220) kleiner ist als in einem an den weiteren ersten Axialabschnitt (A2) angrenzenden stromaufwärtigen zweiten Axialabschnitt (B2) und/oder einem an den weiteren ersten Axialabschnitt (A2) angrenzenden stromabwärtigen zweiten Axialabschnitt (B3) des Dichtungselements (11).

3. Dichtungselement (10) nach einem der vorhergehenden Ansprüche, **dadurch gekennzeichnet, dass** eine axiale Länge des ersten und/oder weiteren ersten Axialabschnitts (A1, A2) wenigstens 110% und/oder höchstens 300% einer axiale Länge einer Stirnseite des diesem gegenüberliegenden Radialflanschs (210) des Gegenelements (200, 220) und/oder wenigstens 50% und/oder höchstens 300% des angrenzenden stromaufwärtigen und/oder stromabwärtigen zweiten Axialabschnitts (B1, B2, B3) beträgt.

4. Dichtungselement (10) nach einem der vorhergehenden Ansprüche, **dadurch gekennzeichnet, dass** die Erstreckung von wenigstens einem, insbesondere stirnseitigen, Querschnitt wenigstens einer Zelle (11) in dem ersten und/oder weiteren ersten Axialabschnitt (A1, A2) in Umfangs- und/oder Axialrichtung höchstens 95% und/oder wenigstens 25% der Erstreckung in dem angrenzenden stromaufwärtigen und/oder stromabwärtigen zweiten Axialabschnitts (B1, B2, B3) beträgt.

5. Dichtungselement (10) zur Dichtung eines Radialspalts zu einem Gegenelement (200, 220) einer Turbomaschine, insbesondere nach einem der vorhergehenden Ansprüche, wobei das Dichtungselement (10) eine Anzahl von in Umfangs- und/oder Axialrichtung benachbarten Zellen (11) aufweist, die durch gemeinsame Wände (12) miteinander verbunden sind, wobei wenigstens eine freie Wand wenigstens einer der Zellen und/oder wenigstens eine gemeinsame Wand (12) wenigstens zweier der Zellen (11) auf wenigstens einem radialen Wandabschnitt (W1+W2) in Umfangs- und/oder Axialrichtung geneigt (α) ist.

6. Dichtungselement (10) nach dem vorhergehenden Anspruch, **dadurch gekennzeichnet, dass** die Wand (12) auf dem Wandabschnitt (W1+W2) in oder gegen eine Relativbewegungsrichtung des Gegenelements (200, 220) und/oder in oder gegen eine Durchströmungsrichtung der Turbomaschine geneigt ist.

7. Dichtungselement (10) nach einem der vorhergehenden Ansprüche 5 bis 6, **dadurch gekennzeichnet, dass** der Wandabschnitt (W1+W2) sich von einer spaltzugewandten Stirnseite (13) der Wand (12) und/oder einem spaltabgewandten Boden (14) der Zelle aus und/oder über wenigstens 5% einer radialen Wandhöhe der Wand (12) erstreckt.

8. Dichtungselement (10) nach einem der vorhergehenden Ansprüche 5 bis 7, **dadurch gekennzeichnet, dass** eine spaltzugewandte Stirnseite (13) der Wand (12) in Umfangs- und/oder Axialrichtung um wenigstens 1% und/oder höchstens 100% einer radialen Wandhöhe (W1+W2) gegen einen Verbindungsquerschnitt der Wand (12) mit einem Bodens (14) der Zelle (11) versetzt ist.

9. Dichtungselement (10) zur Dichtung eines Radialspalts zu einem Gegenelement (200, 220) einer Turbomaschine, insbesondere nach einem der vorhergehenden Ansprüche, wobei das Dichtungselement (10) eine Anzahl von in Umfangs- und/oder Axialrichtung benachbarten Zellen (11) aufweist, die durch gemeinsame Wände (12) miteinander verbunden sind, wobei wenigstens eine freie Wand wenigstens einer der Zellen und/oder wenigstens eine gemeinsame Wand (12) wenigstens zweier der Zellen (11) einen ersten radialen Wandabschnitt (W1) und einen angrenzenden zweiten, spaltnäheren radialen Wandabschnitt (W2), dessen maximale Wandstärke (t2) kleiner ist als eine maximale Wandstärke (t1) des ersten Wandabschnitts (W1), und/oder eine spaltzugewandte Stirnseite (13) aufweist, deren Fläche kleiner ist als eine Fläche wenigstens eines hierzu parallelen Querschnitts eines spaltferneren radialen Wandabschnitts (W1).

10. Dichtungselement (10) nach dem vorhergehenden Anspruch, **dadurch gekennzeichnet, dass** die Querschnittsfläche und/oder maximale Wandstärke der Wand in wenigstens einem verjüngten, insbesondere dem zweiten, Wandabschnitt (W2) zu einer spaltzugewandten Stirnseite (13) der Wand (12) hin, insbesondere bis zu der Stirnseite (13) und/oder monoton, abnimmt.

11. Dichtungselement (10) nach einem der vorhergehenden Ansprüche 9 bis 10, **dadurch gekennzeichnet, dass** der verjüngte und/oder zweite Wandabschnitt (W2) sich von einer spaltzugewandten Stirnseite (13) der Wand (12) aus und/oder über wenigstens 1% einer radialen Höhe der Wand (12) erstreckt und/oder der erste und/oder spaltfernere Wandabschnitt (W1) sich von einer spaltabgewandten Boden (14) der Zelle (11) aus und/oder über wenigstens 50% einer radialen Höhe der Wand (12) erstreckt.

12. Dichtungselement (10) nach einem der vorhergehenden Ansprüche 9 bis 11, **dadurch gekennzeichnet, dass** die maximale Wandstärke der Wand (12) in dem verjüngte und/oder zweiten Wandabschnitt (W2) höchstens 90% und/oder wenigstens 10% der maximalen Wandstärke der Wand (12) in dem ersten Wandabschnitt (W1) beträgt und/oder die Fläche der Stirnseite (13) höchstens 90% und/oder wenigstens 10% der Fläche des Querschnitts in dem spaltferneren Wandabschnitt (W1) beträgt.

13. Dichtungselement (10) nach einem der vorhergehenden Ansprüche, **dadurch gekennzeichnet, dass** die Zellen (11) wenigstens teilweise durch ein freiformendes, insbesondere generatives, Verfahren und/oder wenigstens teilweise aus Metall, insbesondere einer Nickel- und/oder Kobalt-Basis-Legierung, hergestellt sind.

14. Dichtungselement (10) nach einem der vorhergehenden Ansprüche, **dadurch gekennzeichnet, dass** eine spaltzugewandte Stirnseite (13) wenigstes einer der Zellen (11) offen und/oder wenigstens eine der Zellen (11) durch einen spaltabgewandten Boden (14) geschlossen und/oder wenigstens eine der Zellen (11) mit einem Gehäuse- oder Rotorelement, insbesondere einer Schaufelplattform (101) oder einem Dichtungsträger (102), der Turbomaschine integral ausgebildet oder zerstörungsfrei lösbar oder nicht zerstörungsfrei lösbar, insbesondere Stoff-, reib- und/oder formschlüssig, verbunden ist.

15. Dichtungselement (10) nach einem der vorhergehenden Ansprüche, **dadurch gekennzeichnet, dass** die Zellen (11) wenigstens teilweise polygonale, insbesondere hexagonale, Querschnitte aufweisen.

16. Anordnung für eine Turbomaschine, insbesondere Verdichter- oder Turbinenstufe für eine Gasturbine, mit einem Gegenelement (200, 220) und einem gehäuse- oder rotorfesten Dichtungselement (10) nach einem der vorhergehenden Ansprüche zur Dichtung eines Radialspalts zu dem rotor- oder gehäusefesten Gegenelement (200, 220).

17. Turbomaschine, insbesondere Gasturbine, mit wenigstens einer Anordnung nach dem vorhergehenden Anspruch.

18. Verfahren zum Herstellen eines Dichtungselements (10) nach einem der vorhergehenden Ansprüche, wobei die Zellen (11) wenigstens teilweise durch ein freiformendes, insbesondere generatives, Verfahren hergestellt werden.
